# NEUE EUROPÄISCHE PATENTSCHRIFT

(11) **EP 2 420 715 B2**
(45) Veröffentlichungstag und Bekanntmachung des Hinweises auf die Entscheidung über den Einspruch: **19.07.2023**
(45) Hinweis auf die Patenterteilung: 16.05.2018
(21) Anmeldenummer: 11006810.3
(22) Anmeldetag: 19.08.2011
(51) Int. Cl.: F16L 53/00

(54) **Isolations- und/oder Schutzabdeckung für beheizbare Leitungsverbinder**
Insulation and/or protective covering for heatable connectors
Recouvrement d'isolation et/ou de protection pour connecteur de liaison câblée pouvant être chauffée

(30) Priorität: 20.08.2010 DE 102010035028
(43) Veröffentlichungstag der Anmeldung: 22.02.2012
(73) Patentinhaber: Voss Automotive GmbH, 51688 Wipperfürth (DE)
(72) Erfinder: Schwarzkopf, Otfried, 51515 Kürten (DE)
(74) Vertreter: Rebbereh, Cornelia

(56) Entgegenhaltungen:
- EP-A1- 0 284 669
- EP-B1- 0 379 635
- EP-B1- 0 616 166
- EP-B1- 0 907 855
- WO-A1-2009/080477
- WO-A1-2009/080501
- DE-A1-102008 006 323
- DE-U1-202007 010 502
- JP-A- 2003 254 482
- JP-A- 2009 168 120
- US-A1- 2009 224 531

## Beschreibung

Die Erfindung betrifft eine Anordnung umfassend Isolations- und Schutzabdeckung und einen beheizbaren Leitungsverbinder für eine beheizbare Medienleitung, wobei der beheizbare Leitungsverbinder einen mit der Medienleitung und/oder deren Schutzhülle verbindbaren oder verbundenen ersten Anschlussbereich und einen zweiten Anschlussbereich zum Anschluss an eine Einrichtung, insbesondere ein Aggregat oder eine andere Leitung, aufweist, wobei die Isolations- und Schutzabdeckung auf der Außenseite des Leitungsverbinders den ersten Anschlussbereich überdeckend angeordnet ist oder wird, sowie eine beheizbare Medienleitung mit zumindest einer solchen Anordnung.

Isolations- und /oder Schutzabdeckungen zur Isolation bzw. zum Schutz von beheizbaren Leitungsverbindern sind im Stand der Technik bekannt.

Leitungsverbinder dienen zum Verbinden zumindest zweier Medienleitungen bzw. zum Anschließen einer Medienleitung an ein beliebiges Aggregat, das insbesondere in einem Kraftfahrzeug vorgesehen ist. Die Leitungsverbinder sind üblicherweise als Steckverbinder ausgebildet. Verschiedene Arten von Medien werden über diese Medienleitungen geführt, wobei diese zum Teil einen hohen Gefrierpunkt aufweisen und daher bei relativ hohen Umgebungstemperaturen bereits zum Gefrieren neigen. Hierdurch können die eigentlich durch die Medien wahrzunehmenden Funktionen beeinträchtigt oder sogar vollständig verhindert werden. Insbesondere ist dies bei Wasserleitungen für die Scheibenwaschanlage in Fahrzeugen sowie insbesondere bei sogenannten AdBlue^{®} -Leitungen möglich, wobei AdBlue^{®} ein hochreines Reduktionsmittel für SCR-KatalysatorSysteme ist (SCR = Selective Catalytic Reduction). Es ist daher eine Beheizungsmöglichkeit für die Medienleitung und die Leitungsverbinder vorgesehen, um ein Einfrieren der Medien innerhalb von diesen zu vermeiden bzw. deren Auftauen zu ermöglichen. Zur äußeren Isolierung und zum Schutz vor Beschädigungen weisen Medienleitungen und die Leitungsverbinder inklusive diverser Übergangsbereiche bzw. ersten Anschlussbereich zum Anschließen der Medienleitung eine jeweilige Isolations- und/oder Schutzabdeckung auf.

Diese sind, wie beispielsweise in der EP 1 985 908 A1 offenbart, als äußere Kapselung für einen Leitungsverbinder einer Medienleitung beispielsweise im Automobilbereich vorgesehen und als zweiteiliges, aus zwei Gehäusehälften in Form von Halbschalen bestehendes den Leitungsverbinder über einen großen Teil seiner Erstreckung umschließende Einrichtung ausgebildet. Die Gehäusehälften weisen insbesondere komplementäre Rastmittel zum Verbinden miteinander auf. Ferner ist es bekannt, eine Kapselung des Leitungsverbinders mit einem Gehäuse, das um diesen herum gespritzt wird, vorzusehen. Durch die Kapselung kann zwischen dem Leitungsverbinder und dem Gehäuse ein Luftvolumen eingeschlossen werden, das eine thermische Isolation erzeugt. Durch die Ummantelung bzw. Kapselung wird zugleich ein Schutz gegen Beschädigung des Leitungsverbinders geschaffen. Dieses Dokument entspricht dem Oberbegriff des Anspruchs 1.

Einen solchen Aufbau zeigt auch die EP 2 107 291 A2. Entsprechend dieser Druckschrift des Standes der Technik sind Rohrverbindungsabschnitte mit isolierenden Abdeckungen, insbesondere Wellrohrabschnitten, abgedeckt. Der eigentliche Leitungsverbinder ist hingegen ohne eine solche Isolier- bzw. Schutzabdeckung versehen, weist also weder eine durchgängige Umhüllung der Leitung noch eine durchgängige Abdeckung des Leitungsverbinders auf.

Aus der WO 2008/151924 A2 ist eine Anschlussvorrichtung für medienführende elektrisch beheizbare Schläuche bekannt, wobei die Anschlussvorrichtung als Steckverbindung ausgebildet ist und ein Schlauchende einen Steckverbinder aufweist, der auf ein bauseitig an ein Kraftfahrzeug-Aggregat angebrachtes Steckverbindergegenstück aufgesteckt werden kann. Der schlauchseitige Steckverbinder weist einen zylindrischen Gehäusebereich auf, an dessen Ende ein Anschlussstutzen für das Schlauchende angeordnet ist. Auf den zylindrischen Gehäusebereich ist eine geschlossene oder axial offene zylindrische Heizleiteraufnahme aufgeschoben, die in ihrer Oberfläche eine Wendelnut zum Einlegen des oder der Heizleiter aufweist zum Beheizen des zylindrischen Gehäusebereichs. Über der zylindrischen Heizleiteraufnahme ist eine Schutzhülse koaxial angeordnet, die mit der Heizleiteraufnahme verrastet wird. Es ist allerdings keine durchgängige Isolation von Steckverbinder und Umhüllung der Leitung vorgesehen.

Entsprechend der EP 1 721 097 B1 werden bei einer Medienleitung für ein Kraftfahrzeug ein Kabel zum Beheizen der Medienleitung und zumindest ein elektrischer Verbinder zum Verbinden des Kabels mit einer elektrischen Energiequelle vorgesehen, wobei die Medienleitung und das Kabel vollständig von einer äußeren Schutzhülle umgeben sind. Endseitig an der Leitung sind Verbinder angeordnet, die zum Teil das die Leitung ummantelnde Wellrohr übergreifen, wobei einer der Verbinder als Abzweigstück ausgebildet ist. Jedes Endstück der Verbinder und der Leitung ist mit einem Dichtelement abgedichtet. Zum weiteren Verbinden der Leitung sind in diese endseitig Leitungsverbinder eingefügt, die außerhalb des in die Leitung eingefügten Abschnitts ohne weitere Isolierung vorgesehen sind. Somit sind keine Beheizung des Verbinders und auch eine unzureichende Kapselung desselben vorgesehen.

Die JP 2009-168119 A offenbart eine Isolations- bzw. Schutzabdeckung für einen beheizbaren Leitungsverbinder, wobei die Isolations- bzw. Schutzabdeckung unabhängig von der Form des Leitungsverbinders und geeignet zum Erreichen einer effizienten Isolierung ohne Einfluss auf die Qualität des Aufbaus sein soll. Die Isolationsabdeckung für den Leitungsverbinder ist daher mit einem ersten Verbindungsteil versehen, mit dem eine Leitung mit innenliegendem Heizdraht verbunden wird. Ein zweiter Verbindungsteil ist mit dem ersten Verbindungsteil über einen Flüssigkeitsdurchgang verbunden. Ein weiterer Teil ist vorgesehen, der dem Herausführen des Heizdrahtes in einem gegen Flüssigkeit abgedichteten Zustand auf die Außenseite der Schutzabdeckung vorsieht. Die Isolationsabdeckung besteht aus Kunstharz. Zwischen dem Leitungsverbinder und der Isolationsabdeckung ist eine Luftschicht vorgesehen. Abgedeckt ist somit von der Isolationsabdeckung lediglich der eine Anschlussbereich des Leitungsverbinders. In diesen Anschlussbereich kann ein Anschlussstück eingesteckt und durch Haltemittel gehalten werden. In der Isolationsabdeckung ist ein Teilbereich vorgesehen, über den eine indirekte Betätigung des Haltemittels zum Lösen der Verbindung zwischen dem Stecker und dem Leitungsverbinder möglich ist. Auf die Beheizung des Leitungsverbinders wird somit weitgehend verzichtet und die Betätigung des Haltemittels ist schwierig.

Jede der vorstehend genannten Lösungen des Standes der Technik sieht lediglich eine Isolierung eines Teils der Wegstrecke eines Mediums durch eine Leitungsverbinder umfassende Medienleitung vor, so dass es weiterhin zu einem Einfrieren des Mediums kommen kann und eingefrorene Stellen nur schlecht wieder aufgetaut werden können.

Der vorliegenden Erfindung liegt daher die Aufgabe zugrunde, eine demgegenüber verbesserte Isolations- und Schutzabdeckung vorzusehen, bei der noch besser ein Einfrieren eines sich innerhalb des Leitungsverbinders befindenden Mediums verhindert und ein Wiederauftauen noch weiter beschleunigt werden kann.

Die Aufgabe wird für eine Anordnung nach Anspruch 1 gelöst. Weiterbildungen der Erfindungen sind in den abhängigen Ansprüchen definiert.

Dadurch wird eine Isolations- und Schutzabdeckung zur Isolation und zum Schutz eines beheizbaren Leitungsverbinders für eine beheizbare Medienleitung bzw. eine Isolations- und Schutzabdeckung mit einem beheizbaren Leitungsverbinder für eine beheizbare Medienleitung geschaffen, die nach dem Zusammenfügen von Isolations- und Schutzabdeckung und Leitungsverbinder bzw. wenn die Isolations- und Schutzabdeckung auf den Leitungsverbinder aufgefügt ist, so ausgebildet und bemessen ist, dass sie beide Anschlussbereiche des Leitungsverbinders überdeckt bzw. abdeckt, also in sich aufnimmt. Hierdurch ist es somit im Unterschied zu dem vorstehend genannten Stand der Technik möglich, auch den zweiten Anschlussbereich, der zum Anschließen beispielsweise eines Kraftfahrzeug-Aggregates über ein Steckverbindergegenstück bzw. einen Stecker, der in den Leitungsverbinder in Form eines Steckverbinders eingefügt wird, dient, mit zu umgreifen und somit zu isolieren, so dass die Gefahr eines Einfrierens des sich innerhalb des Leitungsverbinders im Übergangsbereich zu dem Kraftfahrzeug-Aggregat bzw. im Steckverbinderbereich befindenden Mediums hier vermieden werden kann. Besonders wichtig ist dies, da dort eine Beheizung nur unzureichend möglich ist, somit die Gefahr eines Einfrierens hier besonders hoch ist. Es ist somit eine ununterbrochene Isolierung über den gesamten Weg des strömenden Mediums möglich, also eine Isolierung der Medienleitung, des Übergangsbereichs zwischen Medienleitung und Leitungsverbinder sowie des entsprechenden ersten Anschlussbereichs des Leitungsverbinders, des zentralen Bereichs des Leitungsverbinders, des zweiten Anschlussbereichs des Leitungsverbinders und einer sich daran ggf. anschließenden weiteren Leitung zum Zuführen des Mediums zu einer weiteren Einrichtung, wie beispielsweise einem Kraftfahrzeug-Aggregat. Ein Einfrieren des Mediums insbesondere im zweiten Anschlussbereich des Leitungsverbinders, wie dies bei den Lösungen des Standes der Technik vorkommen kann, tritt hier somit nicht mehr auf, so dass eine diesbezüglich störungsfreie Strömung von Medium von der Medienleitung über den Leitungsverbinder zu einer weiteren Leitung oder einer weiteren angeschlossenen Einrichtung ermöglicht wird.

Die Isolations- und Schutzabdeckung kann sich zur Isolation und zum Schutz eines Teilbereichs einer an den zweiten Anschlussbereich angeschlossenen oder anzuschließenden Einrichtung, insbesondere eines Kraftfahrzeug-Aggregats oder einer weiteren Rohrleitung bzw. Leitung, über das distale Ende des zweiten Anschlussbereichs hinaus erstrecken. Sie kann sich somit sehr viel weiter als bis zum äußeren Ende des zweiten Anschlussbereichs erstrecken. Somit überdeckt dann die Isolations- und Schutzabdeckung nicht nur den zweiten Anschlussbereich des Leitungsverbinders und erstreckt sich bis zu dessen äußerem Ende, sondern auch noch einen Teilbereich der an diesen angeschlossenen Einrichtung, wie eines Steckers, einer weiteren Leitung oder eines Anschlusses beispielsweise eines Kraftfahrzeug-Aggregats selbst. Somit wird eine noch bessere, da lückenlose Isolier- und Schutzwirkung durch die Isolations- und Schutzabdeckung erzielt, da auch ein Teil der mit dem Leitungsverbinder verbundenen Einrichtung hiervon mit überdeckt werden kann oder wird.

Die Isolations- und Schutzabdeckung ist vorteilhaft schalenförmig, insbesondere durch Zusammenfügen zumindest zweier Schalenhälften ausgebildet, so dass der Leitungsverbinder in einer vorgebbaren Positionierung in der Isolations- und Schutzabdeckung aufgenommen und angeordnet werden kann und diese Position beibehält und die gewünschte Schutzwirkung erzielt und eine Isolierung erreicht werden kann.

Es ist das Halteelement zum Arretieren der Verbindung zu einer an dem zweiten Anschlussbereich anschließbaren oder angeschlossenen Einrichtung zumindest teilweise durch die Isolations- und Schutzabdeckung umschließbar oder umschlossen. Ein solches Halteelement dient zum Festhalten eines Steckers oder einer anderweitigen Einrichtung, der oder die in den zweiten Anschlussbereich des Leitungsverbinders eingefügt wird, in diesem. Ein solches Halteelement wird zumeist von außen in eine entsprechende Öffnung am Ende des Leitungsverbinders eingefügt, um auf dessen Innenseite einen Stecker etc. halten zu können. Durch das Einfügen von außen in eine Öffnung in dem Leitungsverbinder besteht einerseits die Gefahr, dass das Halteelement von außen beschädigt werden könnte. Andererseits besteht die Gefahr, dass durch den Anschlussbereich hindurchströmendes Medium im Bereich des Halteelements einfrieren könnte, da auch dort bislang keine Isolation vorgesehen ist. Das Halteelement ist durch die Isolations- und Schutzabdeckung zumindest teilweise umschlossen, somit isoliert und geschützt.

Zusätzlich zu dem Vorsehen einer sich über ersten und zweiten Anschlussbereich erstreckenden Isolations- und Schutzabdeckung oder unabhängig davon ist die Einrichtung zum Ermöglichen eines direkten Bedienens des lösbaren Halteelements zum Arretieren der Verbindung zu einer an dem zweiten Anschlussbereich anschließbaren oder angeschlossenen Einrichtung, insbesondere einem Kraftfahrzeug-Aggregat-Anschluss, von der Außenseite der Isolations- und Schutzabdeckung aus vorgesehen. Im Unterschied zu der JP 2009-168119 A ist somit keine indirekte, schlecht bedienbare Betätigung eines lösbaren Halteelements vorgesehen, sondern vielmehr eine direkte Betätigung von diesem von der Außenseite der Isolations- und Schutzabdeckung aus. Hierdurch ist es sehr viel einfacher und sicherer möglich, eine solche Bedienung vorzunehmen. Beim indirekten Bedienen eines solchen lösbaren Halteelements kann nicht sicher ausgeschlossen werden, dass es zu Fehlbedienungen kommt, die in der lediglich indirekten Bedienbarkeit begründet sind.

Als weiter vorteilhaft erweist es sich, wenn die Einrichtung zumindest eine Öffnung, insbesondere eine radiale Öffnung, in der Wandung der Isolations- und Schutzabdeckung umfasst. Insbesondere weisen der Leitungsverbinder und die Isolations- und Schutzabdeckung eine jeweilige Öffnung, Ausnehmung oder Aussparung zum Einfügen und/oder Eingreifen oder zum Betätigen bzw. zum Bedienen des lösbaren Halteelements auf. Hierdurch ist es möglich, von der Außenseite der Isolations- und Schutzabdeckung aus ein solches lösbares Halteelement einzufügen, so dass dieses einen in den Leitungsverbinder an dessen zweiten Anschlussende eingefügten Stecker haltend umgreifen kann. Das lösbare Halteelement wird dabei durch die Öffnung oder Aussparung in der Wandung der Isolations- und Schutzabdeckung hindurch in die entsprechende Öffnung, Ausnehmung oder Aussparung in der Wandung des Leitungsverbinders eingefügt. Dort stellt es eine Halte- bzw. Verrastungsfläche im Inneren des Leitungsverbinders in dessen zweiten Anschlussbereich zur Verfügung, um einen eingefügten Stecker oder eine entsprechende Anschlusseinrichtung festhalten zu können.

Vorteilhaft sind das lösbare Halteelement und die Isolations- und Schutzabdeckung im Bereich des lösbaren Halteelements und/oder der Leitungsverbinder im Bereich des lösbaren Halteelements so ausgebildet und dimensioniert, dass ein Hohlraum oder zumindest teilweise Hohlräume zum Erzielen einer Isolationswirkung vorgesehen sind. Zwischen dem lösbaren Halteelement und dem Leitungsverbinder und/oder dem Halteelement und der Isolations- und Schutzabdeckung bzw. in Richtung zu der Isolations- und Schutzabdeckung ist somit ein Abstand vorgesehen, der einen luftgefüllten Hohlraum oder zumindest einen Luftspalt schafft zum Erzielen einer Isolationswirkung.

Das lösbare Halteelement ist als separates Bauteil oder in die Isolations- und Schutzabdeckung integriert als eingefügtes Bauteil oder als integraler Bestandteil vorgesehen. Es kann entsprechend als einteiliges oder als separates Bauteil in den Leitungsverbinder und/oder die Isolations- und Schutzabdeckung integriert sein. Insbesondere im Hinblick auf das Schaffen einer zusätzlichen Isolationswirkung durch Vorsehen von luftgefüllten Hohlräumen kann sich dies als sehr vorteilhaft erweisen.

Die Isolations- und Schutzabdeckung kann so dimensioniert sein, dass sie zumindest den zweiten Anschlussbereich des Leitungsverbinders, insbesondere den ersten und den zweiten Anschlussbereich des Anschlussverbinders, radial umschließen. Hierbei wird also die Isolations- und Schutzabdeckung so ausgebildet, dass sie am zweiten Anschlussbereich des Leitungsverbinders diesen außenseitig umgreift, also eine endseitige Wandung bildet, die sich radial zur Längsachse des Leitungsverbinders im zweiten Anschlussbereich erstreckt. Zum Erzielen einer besonders guten Isolationswirkung ist eine entsprechende sich radial in Richtung der Längsachse des Leitungsverbinders in dessen ersten Anschlussbereich erstreckende Wandung auch dort vorgesehen, um zwischen diesen beiden sich radial erstreckenden Wandungen und dem dazwischen angeordneten Bereich der Isolations- und Schutzabdeckung ein möglichst großes Luftvolumen zur Isolation des Leitungsverbinders bzw. des darin strömenden Mediums einschließen zu können.

Die Isolations- und Schutzabdeckung und der Leitungsverbinder können einteilig ausgebildet sein. Hierdurch ist es bei geeigneter Ausbildung des zweiten Anschlussbereichs möglich, besonders gut und mit guter Isolationswirkung ein lösbares Halteelement anzubringen, wenn beispielsweise dieser Bereich mit einem Isolationswirkung erzielenden Hohlraum und mit entsprechender Ausnehmung, Öffnung oder Aussparung versehen ist, um das lösbare Halteelement darin eingreifen zu lassen.

Der zweite Anschlussbereich kann ferner mit einer Einrichtung zum Beheizen von diesem versehen sein oder werden. Insbesondere kann in einen zwischen dem zweiten Anschlussbereich des Leitungsverbinders und der diesen ummantelnden insolations- und Schutzabdeckung in einem entsprechend dort vorgesehenen Hohlraum ein Heizdraht angeordnet werden, der sich so erstreckt, dass ausreichend Platz zum Einfügen eines lösbares Halteelements verbleibt.

Zur näheren Erläuterung der Erfindung werden im Folgenden Ausführungsbeispiele von dieser näher anhand der Zeichnungen beschrieben. Diese zeigen in:
- Figur 1: eine Draufsicht auf eine Isolations- und Schutzabdeckung des Standes der Technik, angebracht als teilweise Ummantelung eines Leitungsverbinders,
- Figur 2: eine perspektivische Ansicht einer Hälfte einer erfindungsgemäßen Isolations- und Schutzabdeckung,
- Figur 3: eine Draufsicht auf ein Detail einer erfindungsgemäßen Isolations- und Schutzabdeckung in einer zweiten Ausführungsform,
- Figur 4: eine Draufsicht auf die Isolations- und Schutzabdeckung gemäß Figur 3 mit einem eingefügten lösbaren Haltelement,
- Figur 5: eine teilweise Schnittansicht durch die Isolations- und Schutzabdeckung im Bereich des lösbaren Halteelements gemäß Figur 4 ,
- Figur 6: eine Schnittansicht durch eine weitere Ausführungsform einer erfindungsgemäßen Isolations- und Schutzabdeckung,
- Figur 7: eine Explosionsansicht einiger Teile der Isolations- und Schutzabdeckung aus Figur 6 im Bereich des zweiten Anschlussbereichs des Leitungsverbinders,
- Figur 8: eine Schnittansicht durch eine weitere Ausführungsform einer erfindungsgemäßen Isolations- und Schutzabdeckung,
- Figur 9: eine Teil-Schnittansicht durch eine weitere Ausführungsform einer erfindungsgemäßen Isolations- und Schutzabdeckung,
- Figur 10: eine Schnittansicht einer Isolations- und Schutzabdeckung des Standes der Technik,
- Figur 11: eine Zusammenbauansicht der Isolations- und Schutzabdeckung mit Leitungsverbinder und Halteelement gemäß Figur 10,
- Figur 12: eine Schnittansicht durch eine weitere Ausführungsform einer erfindungsgemäßen Isolations- und Schutzabdeckung,
- Figur 13: eine Seitenansicht der Isolations- und Schutzabdeckung nach Figur 10 mit mäandrierten Hohlräumen zur Aufnahme von Heizmitteln,
- Figur 14: eine teilweise Schnittansicht einer nicht erfindungsgemäßen Isolations- und Schutzabdeckung in Ausbildung als Zweikomponenten-Bauteil,
- Figur 15: eine Schnittansicht durch den zweiten Anschlussbereich der Isolations- und Schutzabdeckung gemäß Figur 14 , im Bereich eines lösbaren Halteelements,
- Figur 16: eine Schnittansicht des geschlossenen Halteelements gemäß Figur 15, geschnitten entlang der Linie A-A in Figur 15, und
- Figur 17: eine Schnittansicht des geöffneten Halteelements gemäß Figur 15, geschnitten entlang der Linie A-A in Figur 15.

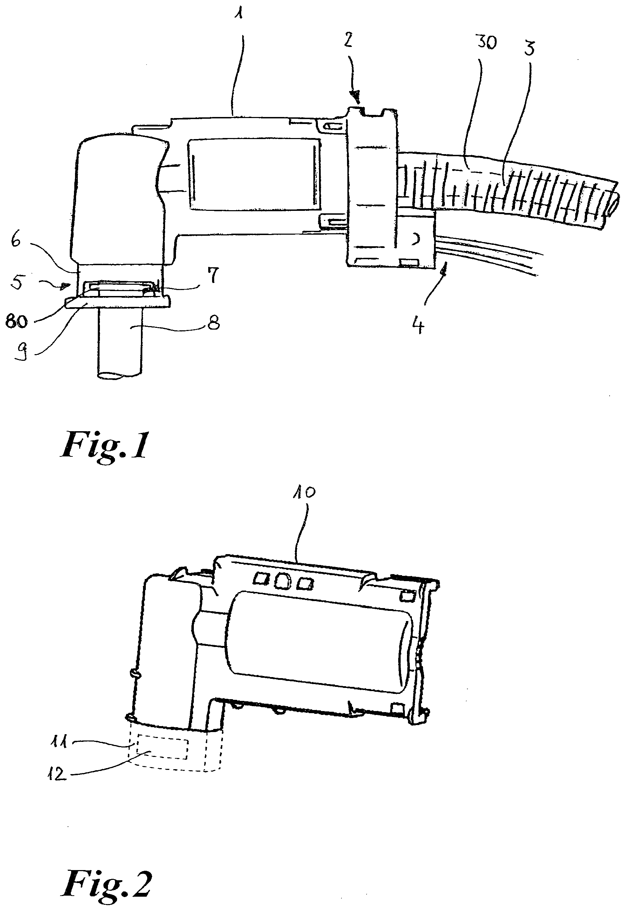

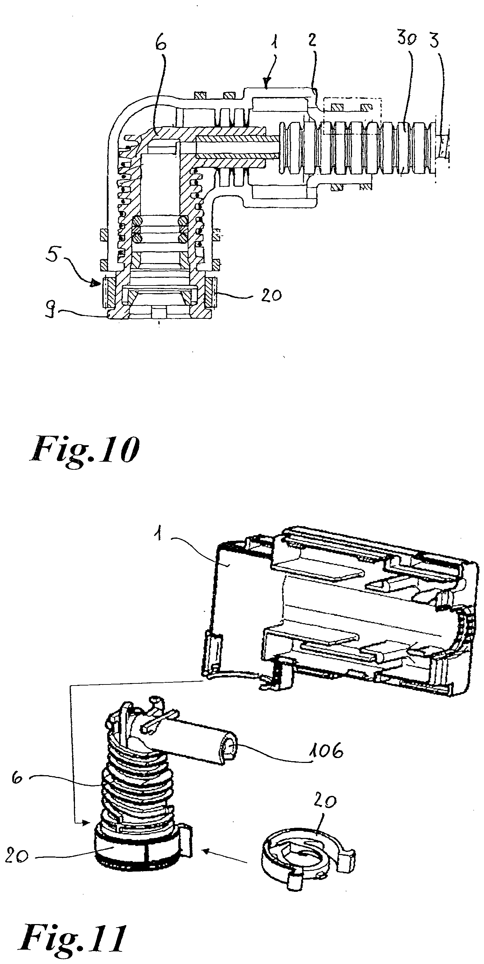

Figur 1 zeigt eine Detailansicht einer beheizbaren Medienleitung im Bereich eines Leitungsverbinders 6. Dieser ist von einer Isolations- und/oder Schutzabdeckung 1 umgeben. Die Isolations- und/oder Schutzabdeckung 1 umgibt den ersten Anschlussbereich 2 zur Medienleitung 3, die von einer Schutzhülle in Form eines Wellrohres 30 umgeben ist, sowie zu einer abgezweigten Versorgungsleitung 4. Dies ist besonders gut auch der Schnittansicht durch den Leitungsverbinder 6 in Figur 10 zu entnehmen. Die Isolations- und/oder Schutzabdeckung 1 überdeckt nicht den zweiten Anschlussbereich 5 des Leitungsverbinders 6, sondern endet vor dem zweiten Anschlussbereich (siehe Figur 10 ). Der zweite Anschlussbereich 5 weist ein Fenster 7 auf, in das ein in Figur 10 und 11 n gezeigtes Halteelement 20 eingreifen bzw. eingeclipst werden kann, um einen in Figur 1 angedeuteten Stecker 8 klemmend bzw. verrastend zu halten. Ein solcher Stecker weist insbesondere einen umlaufenden auskragenden Flansch 80 auf, der von dem Halteelement hintergriffen werden kann.

Das Haltelement 20 ist in der Zusammenbauzeichnung in Figur 11 als Detailansicht zu sehen. Es weist in der Draufsicht eine Ω-Form auf. In Figur 11 sind die Positionierung des Haltelements 20 am äußeren Ende des zweiten Anschlussbereichs 5 des Leitungsverbinder 6 sowie dessen Positionierung in der Isolations- und/oder Schutzabdeckung 1 gezeigt. Insbesondere ist der Leitungsverbinder 6 mit einem Verbindungsstutzen 106 versehen, in den die Medienleitung 3 zum Verbinden mit dem Leitungsverbinder eingefügt werden kann bzw. wird, wie dies auch Figur 10 zu entnehmen ist.

Ersichtlich kann somit der zweite Anschlussbereich 5 des Leitungsverbinders 6 weder isoliert noch von der Isolations- und/oder Schutzabdeckung 1 gegen Beschädigung geschützt werden. Dieser Nachteil wird durch die erfindungsgemäße Isolations- und Schutzabdeckung 10, wie sie in den Figuren 2-9 gezeigt ist, jedoch behoben.

Diese ist so ausgebildet, dass sie sowohl den ersten Anschlussbereich 2 als auch den zweiten Anschlussbereich 5 des Leitungsverbinders 6 überdeckt. Die in Figur 2 gezeigte Isolations- und Schutzabdeckung 10 ist zum Überdecken eines winklig geformten Leitungsverbinders ausgebildet. Ebenso ist es jedoch auch möglich, eine entsprechende Isolations- und Schutzabdeckung zum Schützen und Isolieren eines geraden Leitungsverbinders vorzusehen.

Die Isolations- und Schutzabdeckung 10 weist zum Überdecken des zweiten Anschlussbereichs 5 des Leitungsverbinders 6 einen gegenüber der bekannten Isolations- und/oder Schutzabdeckung 1 gemäß Figur 1 verlängerten Abschnitt 11 auf. Dies ist durch die gestrichelten Linien verdeutlicht. Der Abschnitt 11 weist eine Durchgangsöffnung bzw. ein Fenster 12 auf, das mit dem Fenster 7 des Leitungsverbinders 6 in Überdeckung gebracht werden kann. Die Isolations- und Schutzabdeckung 10 erstreckt sich bis zu dem Leitungsverbinderende oder umgreift dann den Leitungsverbinder 6 außenseitig um seinen endseitig auskragenden Flansch 9 herum.

In Figur 2 ist lediglich eine Hälfte der Isolations- und Schutzabdeckung 10 gezeigt. Diese ist in Form von zwei Halbschalen ausgebildet, die den Leitungsverbinder beidseitig umgeben.

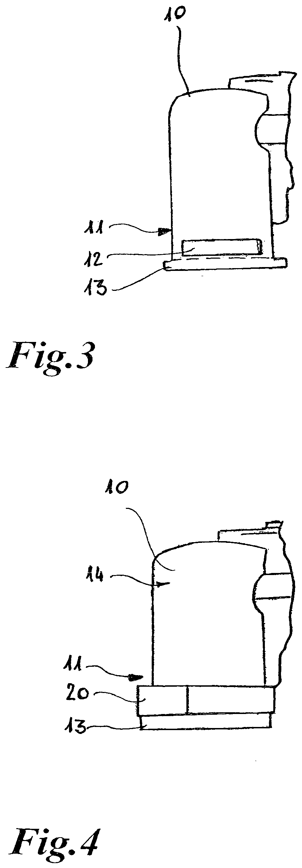

In Figur 3 ist das Detail des Abschnitts 11 der Isolations- und Schutzabdeckung 10 in einer gegenüber der Figur 2 etwas modifizierten Weise gezeigt. Hier ist endseitig ein auskragender Abschnitt 13 gebildet, der dem auskragenden Flansch 9 des Leitungsverbinders 6, wie er in Figur 1 zu sehen ist, schützend umgibt. Auch hier ist wiederum in dem Abschnitt 11 das Fenster 12 ausgebildet, das in Überdeckung mit dem Fenster 7 des Leitungsverbinders 6 angeordnet wird.

Wie in Figur 4 gezeigt, wird nachfolgend zum Vorsehen einer Verrastungs- und Haltmöglichkeit im Inneren des Leitungsverbinders 6 das lösbare Halteelement 20 von der Außenseite 14 der Isolations- und Schutzabdeckung 10 aus in das Fenster 12 und das Fenster 7 eingreifend aufgebracht. Das lösbare Halteelement 20 stützt sich auf dem auskragenden Abschnitt 13 der Isolations- und Schutzabdeckung 10 ab, so dass es fest auf der Außenseite 14 positioniert werden kann.

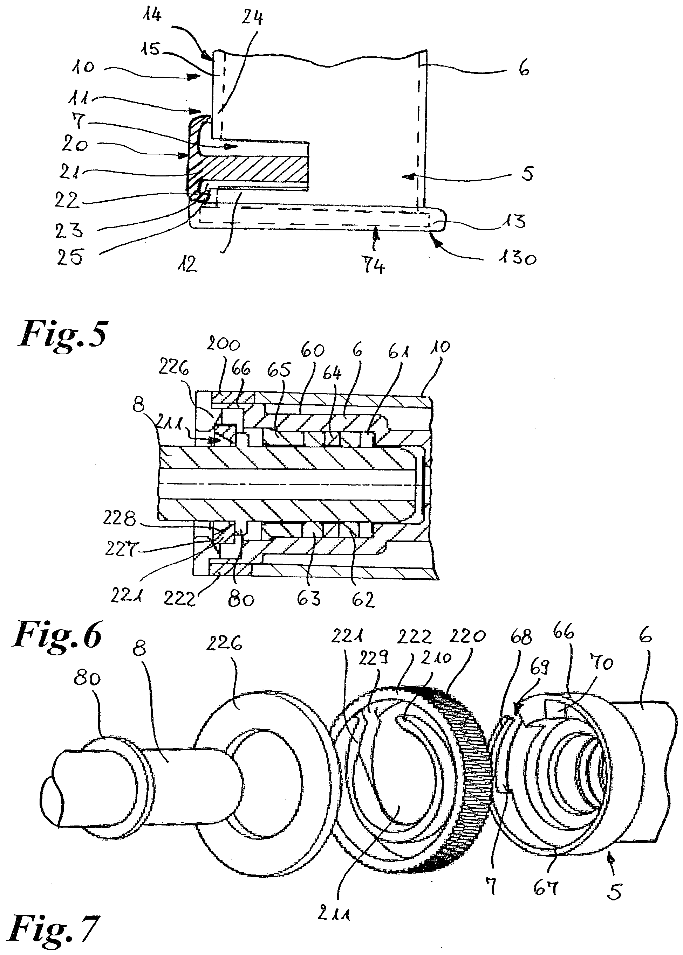

Wie der Schnittansicht durch den zweiten Anschlussbereich 5 bzw. den Abschnitt 11 der Isolations- und Schutzabdeckung 10 in Figur 5 entnommen werden kann, greift das lösbare Halteelement 20 durch das Fenster 12 der Isolations- und Schutzabdeckung 10 sowie das Fenster 7 des Leitungsverbinders 6 hindurch und legt sich mit dem eingreifenden Teilstück 21 auf der Innenseite von diesem an dessen Wandung an. Das eingreifende Teilstück 21 ist mit einem äußeren Teilstück 22 des lösbaren Halteelements 20 verbunden. Das äußere Teilstück 22 legt sich nicht direkt an der Außenseite 14 der Isolations- und Schutzabdeckung 10 an, sondern bildet hier einen Spalt oder Hohlraum 23 zu diesem aus, der als Isolationsraum oder Luftspalt zum Isolieren des zweiten Anschlussbereichs 5 des Leitungsverbinders 6 dient. Wie weiter Figur 5 entnommen werden kann, weist das äußere Teilstück 22 des Halteelements 20 eine im Querschnitt Ω-förmige Ausbildung auf, so dass sich die beiden Wandungsenden 24, 25 auf der Außenseite 14 der Isolations- und Schutzabdeckung 10 abstützen und somit zwischen sich und der Außenseite 14 den gewünschten luftgefüllten Hohlraum 23 ausbilden können. Die Ω-Form des Halteelements kann auch der bereits erwähnten Figur 11 besonders gut entnommen werden.

Wie Figur 5 weiter entnommen werden kann, sind auch Leitungsverbinder 6 und Isolations- und Schutzabdeckung 10 mit Abstand zueinander angeordnet, so dass auch zwischen diesen ein luftgefüllter Hohlraum 15 vorgesehen ist, der der Isolation dient.

Das äußere Ende 74 des zweiten Anschlussbereichs 5 des Leitungsverbinders 6 wird von dem äußeren Ende 130 des auskragenden Flansches 13 des Abschnitts 11 der Isolations- und Schutzabdeckung 10 vollständig überdeckt und somit der gesamte zweite Anschlussbereich 5 isolierend geschützt.

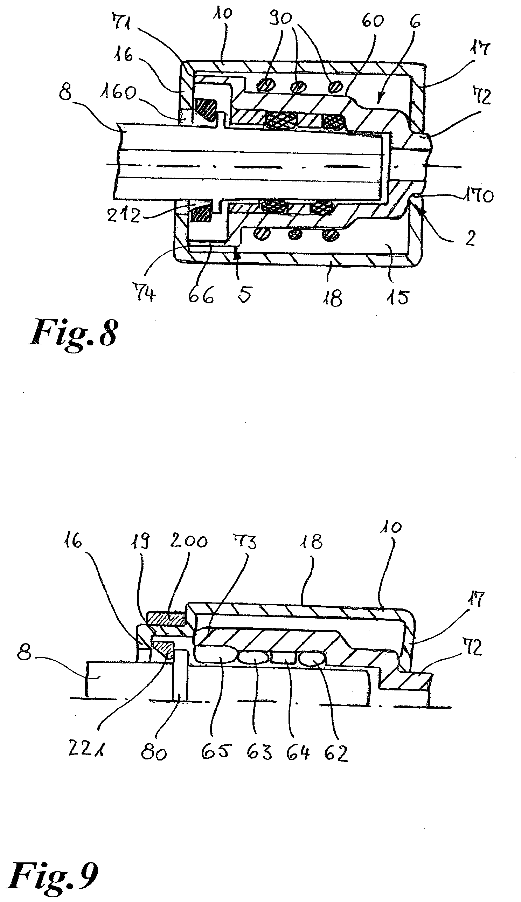

Der Leitungsverbinder 6 wird auf seiner Außenseite 60 mit Heizmitteln, insbesondere Heizdrähten 90 versehen, wie in Figur 8 angedeutet, um eine Erwärmung des innerhalb der Medienleitung 3 sowie des Leitungsverbinders 6 strömenden Mediums zu ermöglichen und hierdurch entsprechend ein Einfrieren des Mediums zu vermeiden. Heizmittel können auch Wärmeleitmittel sein, die Wärme von einem beheizten Bereich in einen unbeheizten Bereich leiten. Es eignet sich hier insbesondere eine Wärmeleiteinrichtung aus einem Metall, wie Aluminium. Durch die Isolations- und Schutzabdeckung erfolgt eine Isolierung des Leitungsverbinders 6 sowie des Übergangsbereichs zur Medienleitung und zu einer weiteren Leitung bzw. insbesondere einem Kraftfahrzeug-Aggregat, das über den Stecker 8 mit dem Leitungsverbinder 6 verbunden ist bzw. verbunden werden kann. Im Inneren 61 des Leitungsverbinders strömt nach dem Anschließen der beheizbaren Medienleitung an die entsprechenden Komponenten beispielsweise in einem Kraftfahrzeug ein Medium, wie Scheibenwaschwasser oder insbesondere ein NOₓ-Reduktionsadditiv für Dieselmotoren mit sog. SCR-Katalysatoren. Um im Inneren 61 des Leitungsverbinders 6 eine gute Abdichtung des eingefügten Steckers 8 vorsehen zu können, sind dort zwei O-Ringe 62, 63, eine diese beiden beabstandende Distanzscheibe 64 sowie eine Abschussbuchse 65 vorgesehen, wie der Querschnittansicht in Figur 6 entnommen werden kann. Wie weiter Figur 6 entnommen werden kann, stützt sich ein lösbares Halteelement 200 auf dem auskragenden Flansch 80 des Steckers 8 haltend ab. Das Halteelement 200 weist eine andere Formgebung auf als das Halteelement 20, wobei das Halteelement 200 axial montiert wird, wohingegen das Halteelement 20 radial montiert wird. Hierauf wird weiter unten noch einmal näher eingegangen.

Wie der Explosionsansicht in Figur 7 besser zu sehen ist, übergreift das äußere Teilstück 222 den Leitungsverbinder 6 an seinem endseitigen Abschnitt 66. In seiner Position zusätzlich gesichert wird das lösbare Halteelement 200 durch eine Stützscheibe 226. Diese weist in Richtung zu dem eingreifenden Teilstück 221 eine Fase 227 auf, so dass hierüber in jeder Position des eingreifenden Teilstücks 221 ein axialer Druck in Richtung des Leitungsverbinder 6 ausgeübt werden kann, um einen optimalen Erhalt des eingefügten Steckers 8 in diesem zu ermöglichen.

Auch das eingreifende Teilstück 221 weist eine Fase 228 auf, die allerdings in Richtung weg von dem auskragenden Flansch 80 des Steckers 8 gerichtet ist, also in die Einführrichtung des Steckers in den Leitungsverbinder weist. Hierdurch ist es auf einfach Art und Weise möglich, das eingreifenden Teilstück 221 beim Einfügen des Steckers 8 mit dem auskragenden Flansch 80 beiseite zu drängen, wobei sich nachfolgend durch Federwirkung des eingreifenden Teilstücks 221, wie dies insbesondere der Figur 7 entnommen werden kann, wieder hinter dem auskragenden Flansch 80 anliegt und dadurch den Stecker 8 im Leitungsverbinder 6 hält. Zum Ausüben einer Federwirkung ist das eingreifende Teilstück 221, wie Figur 7 entnommen werden kann, lediglich als Teilring ausgebildet und an einer Stelle 229 an dem äußeren Teilstück 222, das als vollständiger Ring ausgebildet ist, befestigt. Das äußere Teilstück 222 weist zum besseren Angreifen und Drehen eine geriffelte Außenfläche 220 auf. Wie insbesondere Figur 7 entnommen werden kann, weist der endseitige Abschnitt 66 des Leitungsverbinders 6 nicht nur das Fenster 7, sondern einen mit der übrigen Wandung 67 des endseitigen Abschnitts 66 lediglich einseitig verbundenen Steg 68 auf, der das Fenster endseitig begrenzt. Zwischen dem Ende des Steges 68 und der Wandung 67 ist ein Spalt 69 vorgesehen, durch den die Befestigungsstelle 29 des lösbaren Halteelements hindurch in das Fenster 7 eingeführt wird.

Das Ende 210 des eingreifenden Teilstücks 221 stützt sich an einem Wandungsabsatz 70 ab, so dass beim Drehen des äußeren Teilstücks 222 das eingreifende Teilstück 221, das sich mit seinem Ende 210 an dem Wandungsabsatz 70 abstützt, in Richtung des äußeren Teilstücks 222 bewegt, wodurch die innere Einführöffnung 211 vergrößert wird, um eine Entnahme des Steckers 8 aus dem Leitungsverbinder 6 zu ermöglichen.

Eine Betätigung des Halteelementes 20 ist von der Außenseite der Isolations- und Schutzabdeckung 10 möglich, da dieses, wie insbesondere Figur 5 zu entnehmen ist, von der Außenseite 14 der Isolations- und /oder Schutzabdeckung 10 aus betätigt werden kann. Dies ist ebenfalls in Figur 6 angedeutet.

In Figur 8 ist eine weitere Ausführungsform der Isolations- und Schutzabdeckung 10 gezeigt. Diese weist endseitig jeweils zwei sich radial in Richtung des Leitungsverbinders erstreckende endseitige Wandungen 16, 17 auf. Der Leitungsverbinder 6 stützt sich mit seinem zweiten Ende 71 an der endseitigen Wandung 16 axial ab, wohingegen sich die endseitige Wandung 17 radial auf dem ersten Ende 72 des Leitungsverbinders 6 außenseitig abstützt. Das lösbare Halteelement 20 ist radial montiert. Um dieses axial zu halten, stützt es sich ebenfalls axial an der endseitigen Wandung 16 auf deren zum Leitungsverbinder 6 gerichteten Seite ab. Innerhalb der endseitigen Wandung 16 ist eine Öffnung 160 ausgebildet, durch die der Stecker 8 eingeführt werden kann. Die in der Wandung 17 ausgebildete Öffnung 170 weist in etwa einen solchen Durchmesser auf, dass das erste Ende 72 des Leitungsverbinders darin gut aufgenommen werden kann. Zum Betätigen des lösbaren Halteelementes 20 sind zwei Betätigungsnasen durch zwei entsprechende Öffnungen oder eine längliche Öffnung in der Umfangswandung 18 der Isolations- und Schutzabdeckung 10 auf deren Außenseite 14 hindurchgeführt, wobei durch Angreifen an den beiden Betätigungsnasen und insbesondere deren Zueinander-Bewegen die Öffnungsweite der inneren Einführöffnung 212 des lösbaren Halteelements 20 verändert bzw. vergrößert werden kann, um den Stecker wieder aus dem Leitungsverbinder zu entnehmen.

Wie bereits erwähnt, kann Figur 8 auch die Umwicklung des Leitungsverbinders 6 mit dem Heizdraht 90 entnommen werden. Dieser ist außenseitig auf dem Leitungsverbinder angeordnet, in dem luftgefüllten Hohlraum 15 zwischen Isolations- und Schutzabdeckung 10 und Leitungsverbinder 6, so dass dieser diesen luftgefüllten Hohlraum erwärmt und auf Grund des im Wesentlichen geschlossenen Gehäuses, das die Isolations- und Schutzabdeckung 10 in der Ausführungsform gemäß Figur 8 darstellt, auch den zweiten Anschlussbereich 5 des Leitungsverbinders, in dem das lösbare Halteelement 20 angeordnet ist.

In Figur 9 ist eine Modifikation der in Figur 8 gezeigten Ausführungsform der Isolations- und Schutzabdeckung 10 gezeigt. Diese weist einen gestuft ausgebildeten Umfangswandungsabschnitt 19 auf. Hierdurch ist es möglich, das lösbare Halteelement 200, wie es insbesondere in den Figuren 5 - 7 gezeigt ist, von außen, also außerhalb der Isolations- und Schutzabdeckung 10 aus angreifbar und betätigbar anzuordnen. Das lösbare Halteelement 20 wird radial montiert, wie in Figur 11 zu sehen, wohingegen das lösbare Halteelement 200 axial montiert wird, wie bereits vorstehend beschrieben. Aufgrund des Vorsehens des gestuften Umfangswandungsabschnitts 19 entfällt bei dem Leitungsverbinder 6 der endseitige Abschnitt 66, so dass sich der dazu benachbarte Wandungsteil 73 gegen den gestuften Umfangswandungsabschnitt 19 abstützt (siehe Figur 9).

Auch bei dieser Ausführungsvariante gemäß Figur 9 ist eine besonders gute Isolationswirkung möglich, da die Isolations- und Schutzabdeckung den Leitungsverbinder vollständig umschließt, so dass isolierende luftgefüllte Hohlräume gebildet und sogar der beheizbare Bereich hierdurch vergrößert werden kann.

Ferner ist dennoch eine besonders gute Zugänglichkeit zu dem lösbaren Halteelement 20 bzw. 200 gegeben, so dass dieses direkt von der Außenseite der Isolation- und Schutzabdeckung 10 aus bedient werden kann.

Grundsätzlich ist es ferner möglich, die Isolations- und Schutzabdeckung 10 auch einteilig mit dem Leitungsverbinder auszubilden.

Durch das Vorsehen des lösbaren Halteelements 200 auf der Außenseite der Isolations- und Schutzabdeckung 10 ist dieses nicht nur besonders gut zugänglich, sondern auch weniger anfällig gegen Beschädigungen als bspw. das lösbare Halteelement 20 mit seinen Betätigungsnasen, die ggf. bei Einwirken einer Stoßkraft abbrechen und somit eine weitere Bedienbarkeit unterbinden könnten. Ferner lässt sich das lösbare Halteelement 200 von einer beliebigen Stelle aus außenseitig angreifen und bedienen, wohingegen das lösbare Halteelement 20 sich lediglich durch Angreifen an den beiden Betätigungsnasen bedienen lässt, so dass ein Bediener diese auch ergreifen können muss, um die Bedienung durchführen zu können. Dies führt ggf. jedoch zu Problemen nach dem Einbau der beheizbaren Medienleitung und insbesondere des Bereichs der Isolations- und Schutzabdeckung mit innenliegendem Leitungsverbinder in ein Fahrzeug, insbesondere Kraftfahrzeug, insbesondere einen LKW. In jedem der Fälle stellen die Umfangswandungen der jeweiligen Isolation- und Schutzabdeckungen eine äußere Abstützfläche sowohl für den Leitungsverbinder als auch für das Halteelement 20 bzw. 200 dar. Die Isolations- und Schutzabdeckung erstreckt sich jeweils zumindest bis zum vom Leitungsverbinder weggerichteten Ende des zweiten Anschlussbereichs, wie Figur 9 zeigt, durchaus darüber hinaus, ggf. sogar so weit darüber hinaus, dass nicht nur ein Teil des Steckers 8, sondern auch einer mit diesem in Verbindung stehenden Leitung oder Anschluss bzw. eines Kraftfahrzeug-Aggregats davon mit umfasst wird.

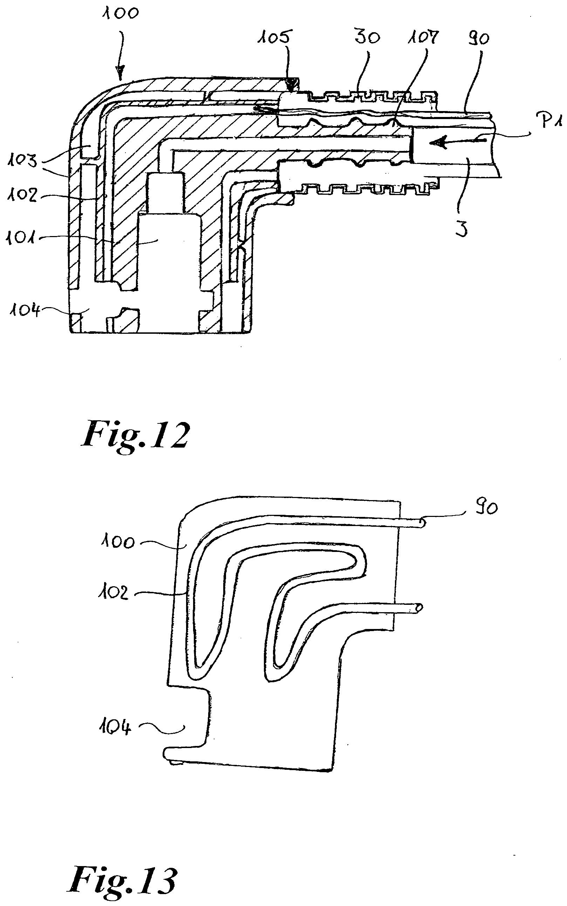

In Figur 12 ist eine monolithische Variante der Isolations- und Schutzabdeckung 100 gezeigt. Bei dieser sind die Isolations- und Schutzabdeckung und der Leitungsverbinder einteilig ausgebildet. Im Innern der Isolations- und Schutzabdeckung 100 ist ein Leitungshohlraum 101 als Fluidweg durch die Isolations- und Schutzabdeckung vorgesehen, um also das Medium durch die Isolations- und Schutzabdeckung hindurchströmen lassen zu können, wie durch den Pfeil P1 angedeutet. Im äußeren Bereich der Isolations- und Schutzabdeckung sind Hohlräume 102 zur Aufnahme von Heizmitteln, wie Heizdrähten etc. angeordnet und weiter nach außen sind benachbart zu diesen Isolationskammern 103 gebildet, um die gewünschte Isolationswirkung der Isolations- und Schutzabdeckung vorsehen zu können. Das Halteelement 20 oder 200 kann in eine entsprechende Aufnahmeöffnung 104 eingefügt werden. Zum isolierenden Anschluss der Schutzhülle 30 der Medienleitung 3 ist ferner ein Anschlussbereich 105 vorgesehen, der entsprechend zur Aufnahme und zum Festhalten der Schutzhülle der Medienleitung ausgebildet ist. Zum Verbinden mit der in der Schutzhülle 30 liegenden Medienleitung 3 ist ein Verbindungsstutzen 107 vorgesehen, der außenseitig gedornt ist, um einen guten Halt der Medienleitung auf dem Verbindungsstutzen zu ermöglichen. Eine Heizdraht-Litze 90 ist beispielhaft teilweise in den einen Hohlraum 102 eingeschoben.

Ein Beispiel für die Anordnung der Hohlräume 102 zur Aufnahme der Heizmittel, insbesondere Heizdrähte 90, ist in Figur 13 gezeigt, wobei der Hohlraum sich in mäandrierter Form auf der Außenseite der Isolations- und Schutzabdeckung 100 erstreckt. Selbstverständlich sind auch andere Formgebungen der Hohlräume möglich, wobei besonders gut der gewünschte Wärmeeintrag und die Position des Wärmeeintrags berücksichtigt werden können. Dasselbe gilt entsprechend auch für die Anordnung und Formgebung der Isolationskammern 103.

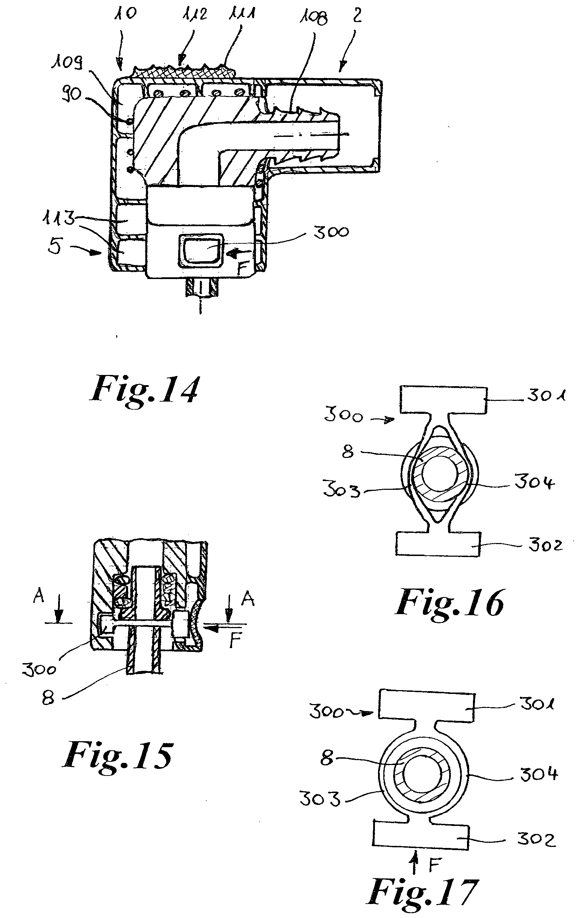

In den Figuren 14 und 15 ist eine Isolations- und Schutzabdeckung 10 oder 100 gezeigt, die aus einem Zweikomponentenmaterial besteht. Die zweite Komponente kann hierbei eine Elastomermaterial sein. Die Isolations- und Schutzabdeckung kann durch Spritzguss hergestellt werden, so dass die Kombination aus zwei Komponenten sich hierbei besonders gut realisieren lässt. Sie kann entweder bereits den Leitungsverbinder umfassen oder als separates Bauteil diesen ummanteln.

Zum Aufstecken der Medienleitung ist ein Leitungsstutzen 108 mit einer gedornten Oberfläche vorgesehen, auf der ein aufgestecktes Rohr oder ein Schlauch besonders gut Halt findet. Die Isolations- und Schutzabdeckung erstreckt sich über diesen ersten Anschlussbereich 2 hinweg, einen Schutz und eine Isolation hier vorsehen zu können. Heizmittel, hier Heizdrähte 90, sind in entsprechenden Hohlräumen 109 angeordnet.

Der zweite Anschlussbereich 5 besteht aus der nachgiebigen Materialkomponente, so dass ein Betätigen eines innenliegenden lösbaren Halteelements 300 hier möglich ist. Das Haltelement 300 ist durch Hohlräume 113 in der Isolations- und Schutzabdeckung isoliert und zugleich geschützt.

Durch Aufbringen einer Kraft F auf eine Betätigungsstelle 110 des Anschlussbereichs 5 ist es möglich, das Halteelement zu lösen, wie in den Skizzen in den Figuren 16 und 17 gezeigt. In Figur 16 ist dabei eine geschlossene Position des Halteelements 300 gezeigt, wohingegen Figur 17 die geöffnete Position zeigt. Das Halteelement 300 weist zwei endseitige Plattenelemente 301 und 302 sowie dazwischen angeordnete Stege 303 und 304, die aufgrund einer eingegebenen Vorspannung eine Klemmkraft ausüben können, wie in Figur 16 bezüglich des Steckers 8 gezeigt. Wird eine Kraft auf die Plattenelemente ausgeübt, können die beiden Stege 303 und 304 voneinander getrennt werden, so dass der Stecker 8 sich entnehmen lässt. Die Stege 303, 304 können Anfasungen aufweisen, die einen besonders guten Halte des Steckers 8 zwischen diesen ermöglicht.

Mit der Isolations- und Schutzabdeckung nach Figur 14 und 15 ist somit, insbesondere in Verbindung mit dem Halteelement 300, eine Betätigung des Halteelements von außen möglich. Zum besseren Angreifen an der Isolations- und Schutzabdeckung beim Betätigen ist auf deren Außenseite ein mit Erhebungen 111 versehener Bereich 112 vorgesehen.

Neben den im Vorstehenden beschriebenen und in den Figuren gezeigten Ausführungsvarianten von Isolations- und Schutzabdeckungen zur Isolation bzw. zum Schutz eines beheizbaren Leitungsverbinders für eine beheizbare Medienleitung können noch zahlreiche weitere vorgesehen werden, bei denen, gemäss den Ansprüchen, jeweils die Isolations- und Schutzabdeckung auf der Außenseite des Leitungsverbinders den ersten Anschlussbereich überdeckend angeordnet ist und sich zumindest bis zum Ende des zweiten Anschlussbereichs des in der Isolations- und Schutzabdeckung aufzunehmenden oder aufgenommen Leitungsverbinders erstreckt.

### Bezugszeichenliste

- 1: Isolations- und/oder Schutzabdeckung
- 2: erster Anschlussbereich
- 3: Medienleitung
- 4: Versorgungsleitung
- 5: zweiter Anschlussbereich
- 6: Leitungsverbinder
- 7: Fenster
- 8: Stecker
- 9: auskragender Flansch
- 10: Isolations- und Schutzabdeckung
- 11: Abschnitt
- 12: Fenster
- 13: auskragender Abschnitt
- 14: Außenseite
- 15: Hohlraum
- 16: endseitige Wandung
- 17: endseitige Wandung
- 18: Umfangswandung
- 19: gestufter Umfangswandungsabschnitt
- 20: lösbares Halteelement
- 21: eingreifendes Teilstück
- 22: äußeres Teilstück
- 23: Hohlraum
- 24: Wandungsende
- 25: Wandungsende
- 26: Stützscheibe
- 27: Fase
- 28: Fase
- 29: Befestigungsstelle
- 30: Schutzhülle
- 60: Außenseite
- 61: Inneres
- 62: O-Ring
- 63: O-Ring
- 64: Distanzscheibe
- 65: Abschlussbuchse
- 66: endseitiger Abschnitt
- 67: Wandung
- 68: Steg
- 69: Spalt
- 70: Wandungsabsatz
- 71: zweites Ende
- 72: erstes Ende
- 73: Wandungsabschnitt
- 74: äußeres Ende
- 80: auskragender Flansch
- 90: Heizdraht
- 100: Isolations- und Schutzabdeckung
- 101: Leitungshohlraum
- 102: Hohlraum für Heizmittel
- 103: Isolationskammer
- 104: Aufnahmeöffnung für Halteelement
- 105: Anschlussbereich
- 106: Verbindungsstutzen
- 107: Verbindungsstutzen
- 108: Verbindungsstutzen
- 109: Hohlraum
- 110: Betätigungsstelle
- 111: Erhebung
- 112: Bereich
- 113: Hohlraum
- 130: äußeres Ende
- 160: Öffnung
- 170: Öffnung
- 200: lösbares Halteelement
- 210: Ende
- 211: innere Einführöffnung
- 212: innere Einführöffnung
- 220: geriffelte Außenfläche
- 221: eingreifendes Teilstück
- 222: äußeres Teilstück
- 226: Stützscheibe
- 227: Fase
- 228: Fase
- 300: Halteelement
- 301: Plattenelement
- 302: Plattenelement
- 303: Steg
- 304: Steg
- P1: Pfeil
- F: Kraft

## Patentansprüche

1. Anordnung umfassend Isolations- und Schutzabdeckung (10,100) und einen beheizbaren Leitungsverbinder (6) für eine beheizbare Medienleitung, wobei der beheizbare Leitungsverbinder (6) einen mit der Medienleitung (3) und/oder deren Schutzhülle (30) verbindbaren oder verbundenen ersten Anschlussbereich (2) und einen zweiten Anschlussbereich (5) zum Anschluss an eine Einrichtung (8), insbesondere ein Aggregat oder eine andere Leitung, aufweist, wobei die Isolations- und Schutzabdeckung (10,100) auf der Außenseite (60) des Leitungsverbinders (6) den ersten Anschlussbereich (2) überdeckend angeordnet ist oder wird, **dadurch gekennzeichnet, dass**
- die Isolations- und Schutzabdeckung (10,100) so ausgebildet ist, dass diese sich zumindest bis zum äußeren Ende (74) des zweiten Anschlussbereichs (5) des in der Isolations- und Schutzabdeckung (10,100) aufzunehmenden oder aufgenommenen Leitungsverbinders (6) diesen überdeckend erstreckt,
- ein lösbares Halteelement (20,200,300) zum Arretieren der Verbindung zu einer an dem zweiten Anschlussbereich (5) anschließbaren oder angeschlossenen Einrichtung (8) zumindest teilweise durch die Isolations- und Schutzabdeckung (10,100) umschließbar oder umschlossen ist, wobei das lösbare Halteelement als separates Bauteil vorgesehen oder in die Isolations- und Schutzabdeckung integriert ist als eingefügtes Bauteil oder als integraler Bestandteil, und
- eine Einrichtung (12) zum Ermöglichen eines direkten Bedienens des lösbaren Halteelements (20,200) zum Arretieren der Verbindung zu einer an dem zweiten Anschlussbereich (5) anschließbaren oder angeschlossenen Einrichtung (8) von der Außenseite (14) der Isolations- und Schutzabdeckung (10,100) aus vorgesehen ist.

2. Anordnung nach Anspruch 1,
**dadurch gekennzeichnet, dass**
die Isolations- und Schutzabdeckung (10,100) sich zur Isolation und zum Schutz eines Teilbereichs einer an dem zweiten Anschlussbereich (5) angeschlossenen oder anzuschließenden Einrichtung (8), insbesondere eines Kraftfahrzeug-Aggregats oder einer weiteren Rohrleitung, über das äußere Ende des zweiten Anschlussbereichs (5) des Leitungsverbinders (6) hinaus erstreckt.

3. Anordnung nach Anspruch 1 oder 2,
**dadurch gekennzeichnet, dass**
die Einrichtung zumindest eine Öffnung (12), insbesondere eine radiale Öffnung, in der Wandung (18) der Isolations- und Schutzabdeckung (10,100) umfasst.

4. Anordnung nach einem der Ansprüche 1 bis 3,
**dadurch gekennzeichnet, dass**
der Leitungsverbinder (6) und die Isolations- und Schutzabdeckung (10,100) eine jeweilige Öffnung (7,12,104), Ausnehmung oder Aussparung zum Einfügen und/oder Eingreifen oder zum Bedienen des lösbaren Halteelements (20,200) aufweisen.

5. Anordnung nach einem der Ansprüche 1 bis 4,
**dadurch gekennzeichnet, dass**
das lösbare Halteelement (20,200) und die Isolations- und Schutzabdeckung (10,100) im Bereich des lösbaren Halteelements (20,200) und/oder der Leitungsverbinder (6) im Bereich des lösbaren Halteelements (20,200,300) so dimensioniert sind, dass ein Hohlraum (23,103,113) oder zumindest teilweise Hohlräume zum Erzielen einer Isolationswirkung vorgesehen sind.

6. Anordnung nach einem der Ansprüche 1 bis 5,
**dadurch gekennzeichnet, dass**
das lösbare Halteelement in die Isolations- und Schutzabdeckung (10,100) integriert ist.

7. Anordnung nach einem der vorstehenden Ansprüche,
**dadurch gekennzeichnet, dass**
die Isolations- und Schutzabdeckung (10,100) zumindest den zweiten Anschlussbereich (5) des Leitungsverbinders (6), insbesondere den ersten (2) und zweiten Anschlussbereich (5) des Leitungsverbinders (6), radial (16,17) umschließt.

8. Anordnung nach einem der vorstehenden Ansprüche,
**dadurch gekennzeichnet, dass**
die Isolations- und Schutzabdeckung (100) und der Leitungsverbinder (6) einteilig ausgebildet sind.

9. Anordnung nach einem der vorstehenden Ansprüche,
**dadurch gekennzeichnet, dass**
eine Einrichtung zum Beheizen des zweiten Anschlussbereichs (5) vorgesehen ist.

10. Beheizbare Medienleitung mit zumindest einer Anordnung nach einem der vorstehenden Ansprüche.

## Claims

1. Arrangement comprising aninsulating and protective covering (10, 100) and a heatable line connector (6) for a heatable media line, wherein the heatable line connector (6) has a first connection region (2), connectable or connected to the media line (3) and/or the protective sleeve (30) thereof, and a second connection region (5) for connection to a device (8), in particular a unit or another line, wherein the insulating andprotective covering (10, 100) has been or is arranged on the outer side (60) of the line connector (6) so as to cover the first connection region (2),
**characterised in that**
- the insulating and protective covering (10, 100) is formed so that it extends at least to the outer end (74) of the second connection region (5) of the line connector (6) which is to be received or has been received in the insulating and protective covering (10, 100), so as to cover said line connector (6),
- a releasable retaining element (20, 200, 300) for locking the connection to a device (8) connectable or connected to the second connection region (5) is enclosable or enclosed at least partially by the insulating and protective covering (10, 100), wherein the releasable retaining element is provided as a separate component or is integrated in the insulating and protective covering as an inserted component or as an integral component, and
- a device (12) for enabling direct operation of the releasable retaining element (20, 200) for locking the connection to a device (8), connectable or connected to the second connection region (5), from the outer side (14) of the insulating and protective covering (10, 100) is provided.

2. Arrangement according to claim 1,
**characterised in that**
the insulating and protective covering (10, 100) extends beyond the outer end of the second connection region (5) of the line connector (6) for insulation and protection of a partial region of a device (8) connected or to be connected to the second connection region (5), in particular of a motor vehicle unit or of a further pipeline.

3. Arrangement according to claim 1 or 2,
**characterised in that**
the device comprises at least one opening (12), in particular a radial opening, in the wall (18) of the insulating and protective covering (10, 100).

4. Arrangement according to one of claims 1 to 3,
**characterised in that**
the line connector (6) and the insulating and protective covering (10, 100) have a respective opening (7, 12, 104), recess or clearance for inserting and/or engaging or for operating the releasable retaining element (20, 200).

5. Arrangement according to one of claims 1 to 4,
**characterised in that**
the releasable retaining element (20, 200) and the insulating and protective covering (10, 100) in the region of the releasable retaining element (20, 200) and/or the line connector (6) in the region of the releasable retaining element (20, 200, 300) are dimensioned so that a hollow space (23, 103, 113) or at least partially hollow spaces for obtaining an insulation effect are provided.

6. Arrangement according to one of claims 1 to 5,
**characterised in that**
the releasable retaining element is integrated in the insulating and protective covering (10, 100).

7. Arrangement according to one of the preceding claims,
**characterised in that**
the insulating and protective covering (10, 100) radially (16, 17) encloses at least the second connection region (5) of the line connector (6), in particular the first (2) and second connection region (5) of the line connector (6).

8. Arrangement according to one of the preceding claims,
**characterised in that**
the insulating and protective covering (100) and the line connector (6) are formed in one piece.

9. Arrangement according to one of the preceding claims,
**characterised in that**
a device for heating the second connection region (5) is provided.

10. Heatable media line with at least one arrangement according to one of the preceding claims.

## Revendications

1. Agencement comprenant un recouvrement d'isolation et de protection (10, 100) et un connecteur de liaison câblée (6) pouvant être chauffée pour une liaison câblée de produit pouvant être chauffée, dans lequel le connecteur de liaison câblée (6) pouvant être chauffée présente une première zone de raccordement (2) reliée ou pouvant être reliée à la liaison câblée de produit (3) et/ou son enveloppe de protection (30) et une seconde zone de raccordement (5) pour le raccordement à un dispositif (8), en particulier un groupe ou une autre liaison câblée, dans lequel le recouvrement d'isolation et de protection (10, 100) est ou devient agencé en recouvrant sur le côté extérieur (60) du connecteur de liaison câblée (6) la première zone de raccordement (2),
**caractérisé en ce que**
- le recouvrement d'isolation et de protection(10, 100) est réalisé de sorte que celui-ci s'étende au moins jusqu'à l'extrémité extérieure (74) de la seconde zone de raccordement (5) du connecteur de liaison câblée (6) reçu ou à recevoir dans le recouvrement d'isolation et de protection (10, 100) en recouvrant celui-ci,
- un élément de retenue amovible (20, 200, 300) pour bloquer la liaison avec un dispositif (8) raccordé ou pouvant être raccordé à la seconde zone de raccordement (5)est ou peut être entouré au moins partiellement par le recouvrement d'isolation et de protection (10, 100),dans lequel l'élément de retenue amovibleest prévu en tant que composant séparé ou intégré dans le recouvrement d'isolation et de protection en tant que composant inséré ou en tant que partie intégrante, et
- un dispositif (12) est prévu pour permettre une commande directe de l'élément de retenue amovible (20, 200, 300) pour bloquer la liaison avec un dispositif (8) raccordé ou pouvant être raccordé à la seconde zone de raccordement (5) depuis le côté extérieur (14) du recouvrement d'isolation et/ou de protection (10, 100).

2. Agencement selon la revendication 1,
**caractérisé en ce que**
le recouvrement d'isolation et de protection (10, 100) s'étend pour l'isolation et la protection d'une zone partielle d'un dispositif (8) raccordé ou à raccorder à la seconde zone de raccordement (5), en particulier un groupe de véhicule automobile ou une autre liaison câblée de tuyau au-delà de l'extrémité extérieure de la seconde zone de raccordement (5) du connecteur de liaison câblée (6).

3. Agencement selon la revendication 1 ou 2,
**caractérisé en ce que**
le dispositif comporte au moins une ouverture (12), en particulier une ouverture radiale, dans la paroi (18) du recouvrement d'isolation et de protection (10, 100).

4. Agencement selon l'une des revendications 1 à 3,
**caractérisé en ce que**
leconnecteur de liaison câblée (6) et le recouvrement d'isolation et de protection (10, 100) présentent une ouverture respective (7, 12, 104), un évidement ou unrenfoncement pour l'insertion et/ou la prise ou la commande de l'élément de retenue (20, 200) amovible.

5. Agencement selon l'une quelconque des revendications 1 à 4,
**caractérisé en ce que**
l'élément de retenue (20, 200) amovible et le recouvrement d'isolation et de protection (10, 100) dans la zone de l'élément de retenue (20, 200) amovible et/ou le connecteur de liaison câblée (6) dans la zone de l'élément de retenue (20, 200, 300) amovible sont dimensionnés de sorte qu'une cavité (23, 103, 113) ou au moins partiellement des cavités soient prévues pour obtenir une action d'isolation.

6. Agencement selon l'une quelconque des revendications 1 à 5,
**caractérisé en ce que**
l'élément de retenue amovible est intégré dans le recouvrement d'isolation et de protection (10, 100).

7. Agencement selon l'une quelconque des revendications précédentes,
**caractérisé en ce que**
le recouvrement d'isolation et de protection (10, 100) entoure radialement (16, 17) au moins la seconde zone de raccordement (5) du connecteur de liaison câblée (6), en particulier la première (2) et seconde zone de raccordement (5) du connecteur de liaison câblée (6).

8. Agencement selon l'une quelconque des revendications précédentes,
**caractérisé en ce que**
le recouvrement d'isolation et de protection (100) et le connecteur de liaison câblée (6) sont réalisés d'un seul tenant.

9. Agencement selon l'une quelconque des revendications précédentes,
**caractérisé en ce que**
un dispositif est prévu pour le chauffage de la seconde zone de raccordement (5).

10. Liaison câblée de produit pouvant être chauffée avec au moins un agencement selon l'une quelconque des revendications précédentes.
